Europäisches Patentamt

(19) European Patent Office

Office européen des brevets

(11) Publication number : **0 404 280 B1**

(12) **EUROPEAN PATENT SPECIFICATION**

(45) Date of publication of patent specification :
**26.10.94 Bulletin 94/43**

(51) Int. Cl.⁵ : **H04B 1/034, G01S 1/68, G01S 5/04**

(21) Application number : **90202267.2**

(22) Date of filing : **18.11.87**

(54) **System and method for determining the position of a person or other body.**

(30) Priority : **08.09.87 JP 224708/87**
**27.10.87 JP 270557/87**

(43) Date of publication of application :
**27.12.90 Bulletin 90/52**

(45) Publication of the grant of the patent :
**26.10.94 Bulletin 94/43**

(84) Designated Contracting States :
**AT BE CH DE ES FR GB GR IT LI LU NL SE**

(56) References cited :
**WO-A-80/00516**
**DE-A- 3 103 370**
**DE-U- 8 703 497**
**FR-A- 2 558 663**
**GB-A- 2 131 655**
**US-A- 3 825 833**

(60) Publication number of the earlier application in
accordance with Art. 76 EPC : **0 306 577**

(73) Proprietor : **Sakuma, Susumu**
**16-7 Uetomino 3-chome**
**Kokurakita-ku**
**Kitakyushu-shi Fukuoka-ken (JP)**

(72) Inventor : **Sakuma, Susumu**
**16-7 Uetomino 3-chome**
**Kokurakita-ku**
**Kitakyushu-shi Fukuoka-ken (JP)**

(74) Representative : **Coxon, Philip et al**
**Eric Potter & Clarkson**
**St. Mary's Court**
**St. Mary's Gate**
**Nottingham NG1 1LE (GB)**

EP 0 404 280 B1

## Description

This invention relates to a portable radio signal transmitter which is particularly suitable for use in a system and method for determining the position of a person or other body.

Among conventionally used instruments or devices to provide against emergencies or threats include a portable alarm or a crime prevention buzzer which are carried at all times and operated to sound a warning by a buzzer should emergency arise. The warning buzzer sound is audible by the neighbourhood who should then immediately inform the police or other suitable authorities for prompt investigation and rescue. However, it is unlikely that anyone would hear the buzzer in a thinly built-up area or at midnight. Moreover, an assailant who hears the buzzer sound might panic and counterattack the user of the alarm.

Abduction or kidnapping are on the increase almost over the world. Usually, the abduction is first discovered when a hostage's family, for example, receives a ransom call from the abductor. The hostage's family then informs the police or the investigating authorities to ask for a search. The police may trace the telephone call from the abductor to follow a lead on the case. The hostage's family, however, often tends to keep the case a secret to get the hostage back safe, in which case the police is kept out of the case and cannot institute the search. No prompt investigation and rescue is established.

It is therefore an object of the invention to provide a portable radio signal transmitter for transmitting a radio signal of a predetermined frequency, which can be carried at all times by a person to be protected by a system for searching for and detecting the radio signal in an emergency.

US 3825833 discloses a personal security device which emits a continuous signal once activated. The device comprises a deferred action battery in which electrolyte is kept in a chamber and isolated from the electrodes and battery terminals by a diaphragm. Operation of a button connected to a spring arm causes the diaphragm to be pierced allowing electrolyte to contact the electrodes and activate the battery. A signal is then generated until the battery runs out.

The invention therefore provides a portable radio signal transmitter comprising an oscillating circuit including a battery, an antenna, a radio signal generator adapted to generate a radio signal of a predetermined frequency, and a non-return contact adapted to maintain said oscillating circuit closed and thereby continuously generate said radio signal; a housing made of a non-magnetic material protectively containing said battery, said antenna and said radio signal generator; and an operating member manually operatable by the user and provided within a recess formed on a surface of said housing, said operating member having no portion outside a level of an outer periphery of said housing, characterised in that the operating member operates a switch to close or open said oscillating circuit, the circuit further comprising a relay which is magnetized when the oscillating circuit is closed to close the non-return contact and maintain the circuit closed.

Further features of the invention are defined in Claims 2, 3 and 4.

The transmitter is particularly useful in cases of emergency, for example when the person carrying the detector is attacked.

The transmitter can also be used to follow moving bodies.

Reference is now made to the accompanying drawings in which:-

Figure 1 is a perspective view of a portable radio signal transmitter according to the invention;

Figure 2 is a sectional view, on an enlarged scale, showing a top portion including a switch operating member of the transmitter shown in Figure 1;

Figure 3 shows a circuit coupled to the transmitter of Figure 1;

Figures 4, 4A, 4B and 4C illustrate the principles involved in triangular surveying, which is used for determining the position of a radio signal source from a transmitter according to the invention; and

Figure 5 is a map showing a trace of a signal source and a position of a directional antenna, during a test sample.

Personal protection against emergencies utilises a transmitter according to the invention adapted to generate a wireless signal. It is desirable that inadvertent operation of the transmitter is avoided, as the signal should be transmitted only in an emergency. According to the invention there is provided an emergency signal transmitter which is substantially free from mis-operation and is operative only when transmission of a signal is really desired.

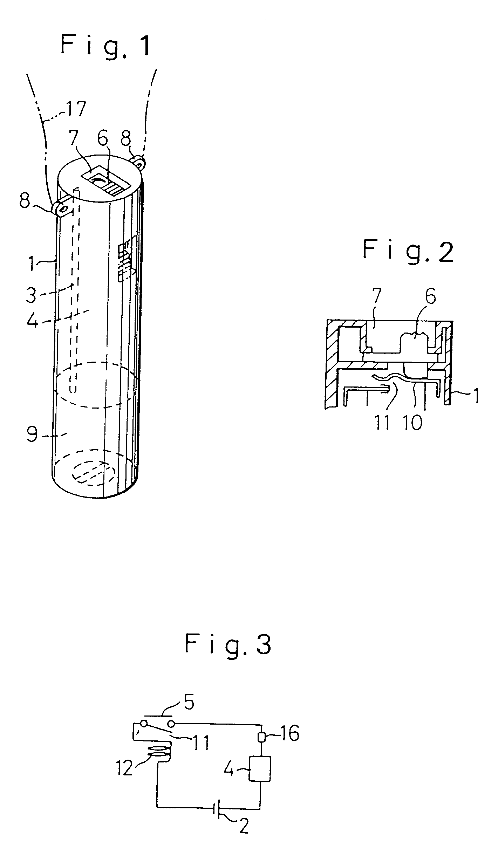

Referring to Figures 1 to 3, the emergency signal transmitter embodying the invention has a casing 1 of non-magnetic material such as plastic. The casing 1 shown in Figure 1 is shaped into a cylinder having a relatively small diameter of, for example, about 1.5 to 2.0 cm and a length of about 5 to 10 cm. The casing 1 may be differently shaped, one example of which is a small box of a size equivalent to a match box. The transmitter is handy for a pocket of the user and is small enough to be kept in a handbag. It can also be worn around the neck of the user by means of a chain or lace 17 passing through a pair of rings 8 flanged outwardly from a top edge of the casing 1.

A battery 9 is contained in the casing 1 at a bottom portion thereof. A rod antenna 3 extends upwardly from the battery 9 and is exposed on the top surface of the casing 1. If desired, the antenna may be constituted by the chain or lace 17. A radio signal generator 4, coupled to the battery 9 and antenna 3, is mounted in the casing 1.

An overall oscillating circuit is represented in Figure 3 which comprises a direct-current electric power supply 2, such as the battery 9 in this embodiment, that can be connected to the opposite terminals of the radio signal generator 4 by turning a switch 11 on. When the circuit is closed, a relay 12 becomes magnetized to close a non-return contact 5 which will keep the circuit closed irrespective of the position of switch 11. Thus, once the user operates switch 11 to make the circuit, the generator 4 will continue to generate a radio signal of a predetermined frequency until the battery 9 runs out. The radio signal is transmitted via the antenna 3 and received by one or more of the non directional antennas of the watching sub-system. Optionally, a buzzer 16 is connected in series within the circuit to ring an alarm.

The top surface of the casing 1 has a recess 7 into which a switch operating member 6 is slidably inserted. As particularly shown in Figure 2, the switch operating member 6 is placed completely below the level of the top surface of the housing 1. The switch operating member 6 may alternatively be provided in a window on a side of housing 1 as shown by imaginary lines in Figure 1. This construction prevents mis-operation of the switch 11, while allowing it to be easily operated or slided by a finger tip of the user in an emergency. The one-touch operation of the member 6 results in continuous transmission of the emergency signal.

The transmitter is particularly suitable for use in a system and method for determining the position of a person as disclosed in EP 0306577. A description of this system is included here by way of example. Each person to be protected by the system must always carry the transmitter and manually switches the transmitter on should emergency arise, thereby generating an emergency signal of a predetermined frequency. Before making the system operatable, the frequency of the emergency signal should preferably be assigned and predetermined by the Radio Regulatory Commission or other authorities concerned, to prevent jamming or interference. The emergency signal must have an output large enough to be received by antennas of the system.

The system further comprises, on the ground, a watching sub-system, a chasing sub-system and a computer sub-system.

The watching sub-system incudes a plurality of non-directional antennas mounted substantially evenly over a protectable area which operates at all hours to watch out for an emergency signal transmitted. The emergency signal generated by the operator in an emergency will be detected by at least one of the non-directional antennas located relatively near the signal source. The watching sub-system may preferably utilise a network of a security system already in operation.

The chasing sub-system includes several directional scanners or antennas mounted dispersively in the protectable area. This sub-system is operated in response to detection of the emergency signal by the antenna or antennas of the watching sub-system to rotate two or more of the directional antennas and to detect two directions in which field strength meters attached to the respective antennas show the maximum field strength values. With the data concerning the locations of the respective antennas and the two directions showing the maximum field strength, the signal source, indicating where the operator is imprisoned by the abductor, for example, will be determined by utilising triangular surveying.

The computer sub-system functions to integrate the information of the watching and chasing sub-system and to support operation therefore. Preferably, a computer display illustrates a map in the protectable area on a scale which is magnified by degree as the chase progresses in the watching and chasing sub-systems. Detection of the two directions showing the maximum field strength in the chasing sub-system may also be effected with the help of the computer.

The emergency signal transmitter of the present invention is preferably equipped with an additional function to generate at the same time a personal identification code by way of pulse code modulation, for example. This will make it possible to identify the person who encounters the emergency, as well as to determine the location where he or she is.

As aforementioned, triangular surveying is utilised to determine the source of the emergency signal. This will now be explained in more detail.

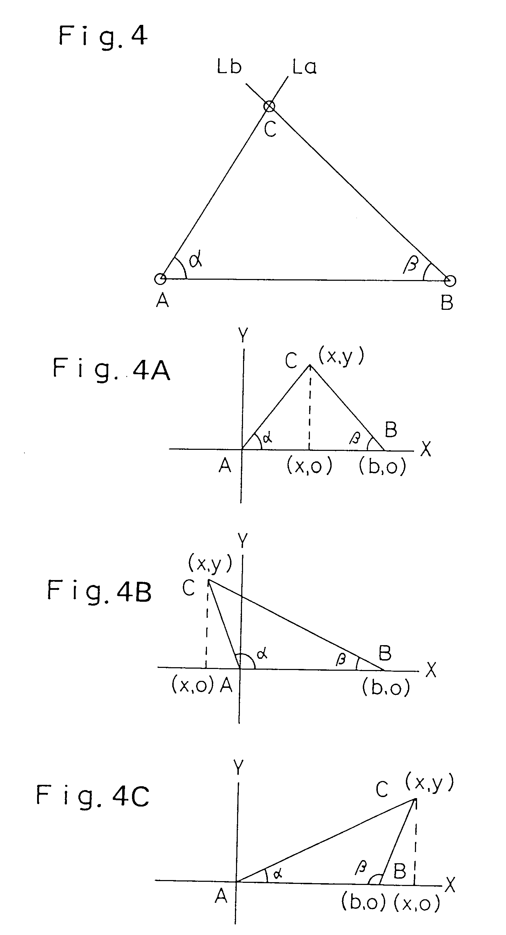

Referring to Figure 4, two half lines La and Lb extending from fixed points A and B respectively cross each other at a point C, and angles between a segment of a line AB and the lines La and Lb are defined as $\alpha$ and $\beta$, respectively. In this case only one triangle ABC will be given, thus specifically determining the location of the intersecting point C.

Suppose scanners or antennas in the chasing sub-system are mounted at points A and B respectively, which show the maximum field strength in directions La and Lb respectively, a source of the emergency signal can readily be specified as being located at a point C.

Referring now to Figure 4A, 4B and 4C, point A is an origin (0,0) and point B set on the X-axis has co-ordinates of (b,0). Provided that sides AB and AC cross each other at an angle $\alpha$ and sides BA and BC at an angle $\beta$, and that a point C is set on co-ordinates (x,y), the following two equations can be obtained:

$$y = x\tan\alpha \quad (1)$$
$$y = (b - x)\,tab\beta \quad (2)$$

Equations (1) and (2) leads:

$$x\tan\alpha = (b - x)\tan\beta$$
$$\therefore x(\tan\alpha + \tan\beta) = b\tan\beta$$

$$x = \frac{b\tan\beta}{\tan\alpha + \tan\beta} \qquad ---(3)$$

"x" in equation, (1) is substituted by equation (3) to lead:

$$y = \frac{b\tan\alpha \cdot \tan\beta}{\tan\alpha + \tan\beta} \qquad (4)$$

Thus, co-ordinates (x,y) of point C can be specified from equations (3) and (4).

In the above calculation point C is supposed to be located as shown in Figure 4A where $0° < \alpha > 90°$ and $0° < B < 90°$, however, the same relations will apply to the cases of Figure 4B where $90° < \alpha < 180°$ and $0° < \beta < 90°$ and Figure 4C where $0° < \alpha < 90°$ and $90° < \beta < 180°$. The same will also apply to the case where point C is located below the X-axis.

In some special cases, co-ordinates of point C may be determined as follows:

Where $\alpha = 90°$ and $0° < \beta < 90°$,
$x = 0$, $y = b\tan\beta$
Where $0° < \alpha° < 90°$ and $\beta = 90°$,
$x = b$, $y = b\tan\alpha$

In some exceptional cases co-ordinates of point C cannot be specifically determined but its location can be followed up on the following assumptions:

Where $\alpha = 0°$ and $\beta = 0°$,
C is located on the X-axis between A and B
Where $\alpha = 0°$ and $\beta = 180°$,
C is located on the X-axis and on the right of B
Where $\alpha = 180°$ and $\beta = 0°$,
C is located on the X-axis and on the left of B

In the foregoing description the system is used in practice when a person carrying the radio signal transmitter such as shown in Figures 1 to 3 manually operates the transmitter to generate the emergency signal when he meets any emergency or contingency, particularly when he is abducted. The non-directional antennas of the watching sub-system will continuously watch for the emergency signal without a break and the directional antennas of the chasing sub-system will stand by so as to start its operation at any time responsive to detection of the emergency signal by one or more of the non-directional antennas.

This transmitter is, however, applicable more widely to the determination of the position of a moving body. For example, an insurance company employs a lot of salesmen dispersed over a specific area and spending most of their working hours outside the company.

To control effectively the labour force it is desirable to constantly watch where the employees are or how they move. This is possible by utilising the transmitter according to the invention and an appropriate network system. Every salesman carries the portable radio signal transmitter about himself whose switch is fixed to the ON position, or which is equipped with no switch operating member, to constantly generate the signal of the predetermined frequency, which is in turn received by the non-directional antenna or antennas and by the directional antennas. Identification of each salesman can be made by frequency modulation.

**Test Sample**

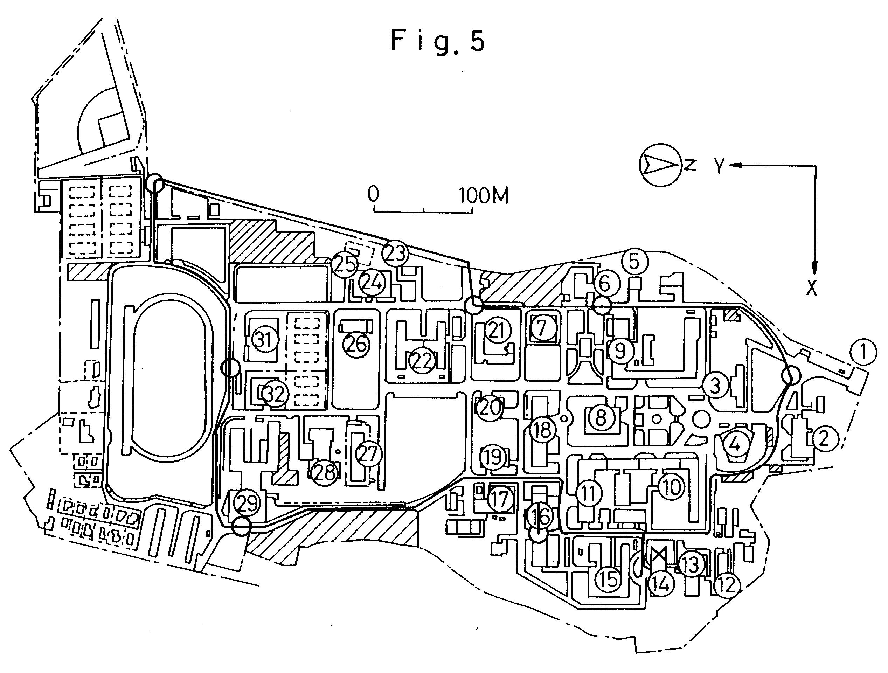

A radio control transmitter for radio-controlled model airplanes (Futaba Denshi Kogyo, FP-8Ap, signal frequency of 40MHz) was used as a portable radio signal transmitter. Referring to Figure 5, a person carrying the transmitter with the switch kept turned on started walking from the roof of a 4-storey building No. 14. He slowly walked around the course shown by a successive bold line in the clockwise direction and then returned to the No. 14 building. On the way, he stopped at positions shown by a circle for 5 to 10 minutes.

A 4-element directional Yagi antenna (Maspro Denko, 50T4, for 52MHx) was mounted on the roof of No. 14 building at a height of 4m and rotated by a rotator (KENPRO, KR-5600A). A field strength meter (Leader Denshi, LFC-945) was coupled to the antenna via coaxial cable ($75\Omega$) to measure with the eye the direction in which the meter showed a maximum field strength value.

The purpose of this test was to compare with each other the position of the transmitter and the direction showing the maximum field strength, both varying with time. As a result it was confirmed that the transmitter was positioned substantially in the direction of the antenna showing the maximum field strength. This shows that the radio signal source can be traced in accordance with triangular surveying.

It should be noted that the instruments including the transmitter and antenna used in this test are not of high-fidelity standard. The eye-measurement of the direction showing the maximum field strength would produce some degree of error. Nevertheless, substantially satisfactory results were obtained in this test. If high-fidelity transmitters and receivers is used and the maximum field strength is automatically detected with the help of a computer, more reliable results will be obtained, leading to more accurate and definite determination of the radio signal source. Thus, prompt rescue or search may be arranged.

**Claims**

1. A portable radio signal transmitter comprising an oscillating circuit including a battery (9), an antenna (3), a radio signal generator (4) adapted to generate a radio signal of a predetermined frequency, and a non-return contact (5) adapted to maintain said oscillating circuit closed and thereby continuously generate said radio signal; a housing (1) made of a non-magnetic material protectively containing said battery (9), said antenna (3) and said radio signal generator (4); and an operating member (6) manually operatable by the user and provided within a recess (7) formed on a surface of said housing (1), said operating member (6) having no portion outside a level of an outer periphery of said housing (1), characterised in that it further comprises a switch (11) associated with said non-return contact said operating member (6) operating said switch (11) to close or open said oscillating circuit, and a relay (12) which is magnetized when the oscillating circuit is closed to close the non-return contact (5) and maintain the circuit closed.

2. A portable radio signal transmitter according to Claim 1, characterised in that said housing (1) is shaped into substantially a cylinder or a box.

3. A portable radio signal transmitter according to Claim 1 or 2, characterised in that said housing (1) is provided with means (17) for wearing said housing (1) around a neck of the user.

4. A portable radio signal transmitter according to any other preceding claim characterised by a buzzer (16) for ringing an alarm when said circuit is closed.

**Patentansprüche**

1. Tragbarer Funksignalsender bereit, welcher folgendes umfaßt: einen Schwingkreis mit einer Batterie (9), einer Antenne (3), einem Funksignalgenerator (4) zur Generierung eines Funksignals einer vorgegebenen Frequenz und einem Rastkontakt (5), welcher so ausgeführt ist, daß er den Schwingkreis geschlossen hält und dadurch das Funkdauersignal generiert; ein Gehäuse (1) aus einem nichtmagnetischen Material zur schützenden Aufnahme der Batterie (9), der Antenne (3) und des Funksignalgenerators (4); und ein vom Benutzer manuell zu betätigendes und in einer Aussparung (7) in der Oberfläche des Gehäuses (1) vorgesehenes Betätigungselement (6), wobei dieses Betätigungselement (6) mit keinem Abschnitt aus der Ebene eines Außenumfangs des Gehäuses (1) herausragt, dadurch gekennzeichnet, daß er weiterhin einen dem Rastkontakt zugehörigen Schalter (11) umfaßt, wobei das Betätigungselement (6) den Schalter (11) zum Öffnen oder Schließen des Schwingkreises betätigt und ein Relais (12), welches bei Schließen des Schwingkreises magnetisiert wird, um den Rastkontakt (5) zu schließen und den Kreis geschlossen zu halten.

2. Tragbarer Funksignalsender gemäß Anspruch 1, dadurch gekennzeichnet, daß das Gehäuse (1) im wesentlichen zylinder- oder schachtelförmig geformt ist.

3. Tragbarer Funksignalsender gemäß Anspruch 1 oder 2, dadurch gekennzeichnet, daß das Gehäuse (1) mit einer Einrichtung (17) zum Tragen des Gehäuses um den Hals eines Benutzers versehen ist.

4. Tragbarer Funksignalsender gemäß einem der vorstehenden Ansprüche, gekennzeichnet durch einen Summer (16) zum Absetzen eines akustischen Alarmsignals, wenn der Kreis geschlossen ist.

**Revendications**

1. Emetteur portatif de signaux radio comprenant un circuit oscillant comprenant une batterie (9), une antenne (3), un générateur de signaux radio (4) adapté pour produire un signal radio d'une fréquence prédéterminée, et un contact de non-retour (5) adapté pour maintenir fermé ce circuit oscillant et de ce fait continuer à produire ledit signal radio, un boîtier (1) en un matériau non magnétique protégeant et contenant la batterie (9), l'antenne (3) et le générateur de signaux radio (4), et un élément d'actionnement (6) pouvant être actionné manuellement par l'utilisateur et disposé à l'intérieur d'un évidement (7) formé sur une surface du boîtier (1), cet élément d'actionnement (6) n'ayant aucune portion à l'extérieur du niveau de la périphérie extérieure du boîtier (1), caractérisé en ce qu'il comprend en outre un interrupteur (11) associé au contact de non-retour, cet élément d'actionnement (6) actionnant ledit interrupteur (11) pour fermer ou ouvrir le circuit oscillant, et un relais (12) qui est magnétisé lorsque le circuit oscillant est fermé pour fermer le contact de non-retour (5) et maintenir le circuit fermé.

2. Emetteur portatif de signaux radio selon la revendication 1, caractérisé en ce que le boîtier (1) a pratiquement la forme d'un cylindre ou d'une boîte.

3. Emetteur portatif de signaux radio selon la revendication 1 ou la revendication 2, caractérisé en ce que le boîtier (1) est équipé de moyens (17) pour porter le boîtier (1) autour du cou de l'utilisateur.

4. Emetteur portatif de signaux radio selon l'une des revendications précédentes, caractérisé par un vibreur (16) pour déclencher une alarme lorsque le circuit est fermé.

# Fig. 1

# Fig. 2

# Fig. 3

Fig. 4

Fig. 4A

Fig. 4B

Fig. 4C

Fig. 5